**Europäisches Patentamt**

**European Patent Office**

**Office européen des brevets**

(19)

(11) Veröffentlichungsnummer: **0 214 411**
**A2**

(12) ## EUROPÄISCHE PATENTANMELDUNG

(21) Anmeldenummer: **86109830.9**

(22) Anmeldetag: **17.07.86**

(51) Int. Cl.⁴: **B 23 F 5/02**

(30) Priorität: **09.09.85 DE 3532115**

(43) Veröffentlichungstag der Anmeldung:
**18.03.87 Patentblatt 87/12**

(84) Benannte Vertragsstaaten:
**CH DE FR GB IT LI SE**

(71) Anmelder: **BHS-Dr. Ing. Höfler Maschinenbau Gmbh**
**Industriestrasse 19**
**D-7505 Ettlingen-Oberweier(DE)**

(72) Erfinder: **van de Löcht, Heinrich, Dipl.-Ing. Dr. Ing.**
**Karlsruherstrasse 104**
**D-7553 Muggensturm(DE)**

(72) Erfinder: **Brodbeck, Marzell, Dipl.-Ing.**
**Grötzingerstrasse 69**
**D-7500 Karlsruhe 41(DE)**

(74) Vertreter: **Eder, Eugen, Dipl.-Ing. et al,**
**Patentanwälte Dipl.-Ing. E. Eder Dipl.-Ing. K. Schieschke**
**Elisabethstrasse 34**
**D-8000 München 40(DE)**

(54) **Teilwälzschleifverfahren mit gekrümmten Hüllschnitten.**

(57) Die Erfindung bezieht sich auf ein Wälzschleifverfahren zum Herstellen gekrümmter Zahnflanken eines auf einem Werkstücktisch befestigten Zahnrades durch mindestens eine Hubbewegungen ausführende Schleifscheibe. Hierbei wird erfindungsgemäß die Zahnflanke 4 durch eine vom Profil 3 der Schleifscheibe 5 und der Hublänge begrenzte, gekrümmte Hüllschnittfläche erzeugt.

FIG. 3

Dipl.-Ing. E. Eder
Ipl.-Ing. K. Schieschke
München 40, Elisabethstraße 34

**0214411**

Teilwälzschleifverfahren mit gekrümmten Hüllschnitten

Die Erfindung bezieht sich auf ein Wälzschleifverfahren zum Herstellen gekrümmter Zahnflanken eines auf einem Werkstücktisch befestigten Zahnrades durch mindestens eine Hubbewegungen ausführende Schleifscheibe.

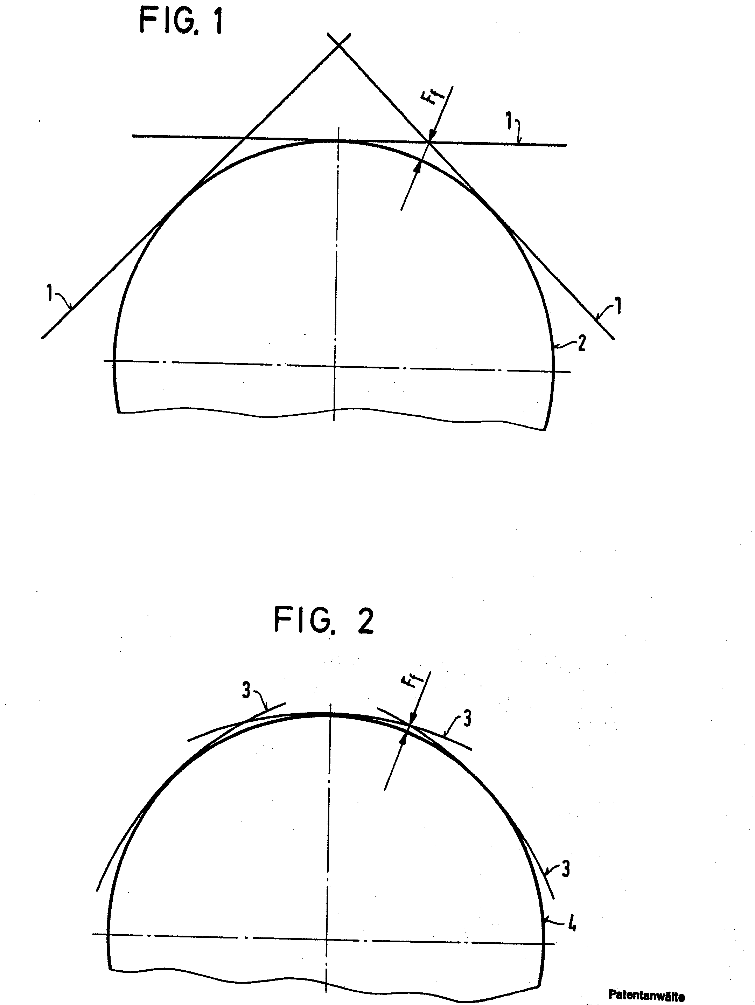

Grundlegendes Problem bei Wälzschleifmaschinen zur Herstellung von Zahnrädern ist der stark gegenläufige Einfluß von Leistungs- und Qualitätsanforderungen. Verfahrensbedingt kann die im allgemeinen Fall doppelt räumlich gekrümmte Zahnflanke durch eine endliche Zahl gerader Hüllschnitte nur angenähert hergestellt werden. Selbst bei idealem Maschinenverhalten ergeben sich die in Fig. 1 dargestellten Flankenformfehler mit ausgeprägter Welligkeit. Hierbei ist das Profil 1 der Schleifscheibe geradlinig ausgebildet, wodurch sich in schematischer Darstellung bei der Erzeugung der Zahnflanke 2 Flankenformfehler $F_f$ ergeben, d.h. diese Flankenformfehler weisen ausgeprägte Welligkeit auf.

Da in diesem Fall die technologische Grenze des Verfahrens erreicht ist, ließe sich eine Qualitätsverbesserung bei gleichbleibender Leistung zunächst nur durch entsprechende Erhöhung der Hubfrequenz erreichen. Dieser Entwicklungsrichtung sind jedoch relativ enge Grenzen gesetzt, da der Antriebsaufwand des Schleifschlittens bei einer Wälzschleifmaschine unvertretbar groß und kostenaufwendig ist.

Darüber hinaus besteht durch die begrenzte Steifigkeit insbesondere der bewegten Maschinenelemente die Gefahr von Schwingungen, die verstärkt über die Maschinengeometrie relativ große Verzahnungsfehler herbeiführen können.

**0214411**

Aufgabe der vorliegenden Erfindung ist es demgegenüber, bei einer Wälzschleifmaschine ein Verfahren zu schaffen, mit dessen Hilfe auf einfache und kostensparende Weise Flankenformfehler erheblich reduziert werden.

Diese Aufgabe wird erfindungsgemäß dadurch gelöst, daß die Zahnflanke durch eine vom Profil der Schleifscheibe und der Hublänge begrenzte konkave Hüllschnittfläche erzeugt wird. Es ergibt sich dadurch vorteilhafterweise eine besonders effektive Maßnahme zur Reduzierung der Flankenformfehler unter gleichzeitiger Reduzierung der Hubfrequenz ohne Leistungs- und Qualitätseinbußen.

In weiterer Ausgestaltung der Erfindung kann bei einer Vorrichtung zur Durchführung des Verfahrens das Profil der Schleifscheibe als konkav gekrümmte Schnittfläche ausgebildet sein.

Bei einer Wälzschleifmaschine mit Doppelkegelscheibe können beide Seiten der Doppelkegelscheibe in weiterer Ausgestaltung der Erfindung jeweils als konkav gekrümmte Schnittfläche ausgebildet werden.

Vorteilhafte Weiterbildungen ergeben sich aus den weiteren Unteransprüchen.

Die Erfindung wird nachfolgend anhand eines in der Zeichnung dargestellten Ausführungsbeispiels näher beschrieben. In der Zeichnung zeigen:

Fig. 2            eine schematische Draufsicht auf eine konkav gekrümmte Hüllschnittfläche;

Fig. 3            eine schematische Draufsicht auf eine konkav gekrümmte Hüllschnittfläche am Profil einer Schleifscheibe;

Fig. 4                eine schematische Draufsicht auf eine
                      Wälzschleifmaschine.

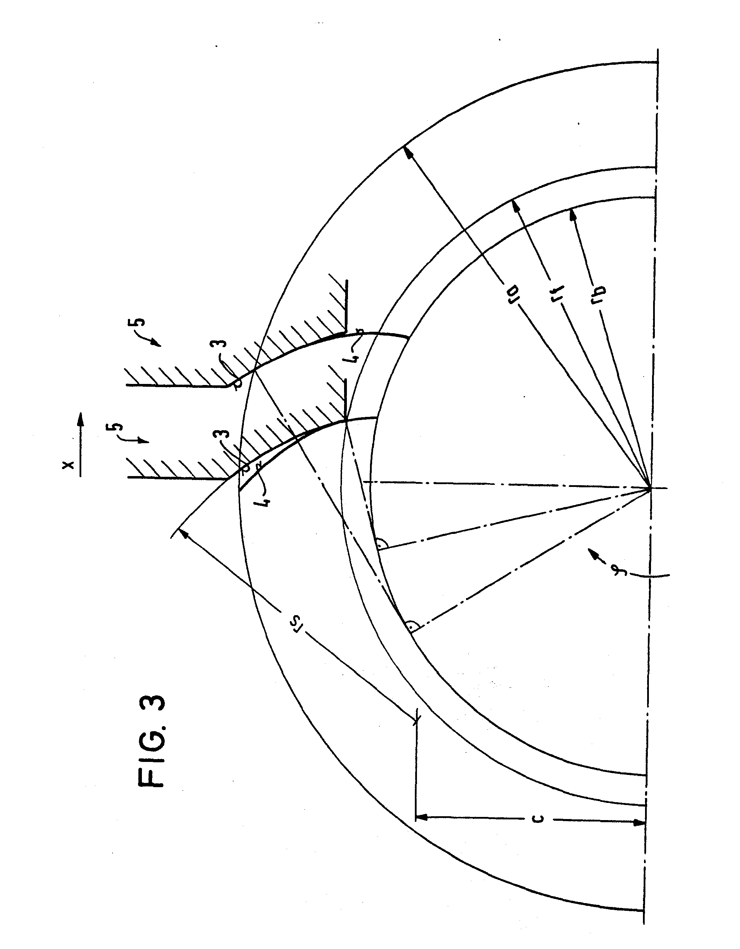

Aus Fig. 2 ist ersichtlich, daß bei Anwendung einer konkav
gekrümmten Schnittfläche 3 für das Profil einer Schleifscheibe zur Erzeugung einer Zahnflanke 4 der Flankenformfehler $F_f$ wesentlich kleiner ist als der Flankenformfehler
bei Einsatz herkömmlicher Technologien gemäß Fig. 1. Erfindungsgemäß weist also das Profil der Schleifscheibe eine
einfach konkav gekrümmte Schnittfläche auf. Diese Schnittfläche 3 ist in Fig. 3 näher dargestellt, und zwar an einer
Seite einer Schleifscheibe 5. Hierbei wird eine Zahnflanke
4 eines Zahnrades 6 erzeugt, dessen Flankenformfehler erheblich reduziert sind.

Die konkav gekrümmte Schnittfläche des Profils 3 der Schleifscheibe 5 läßt sich auch bei Doppelkegelscheiben anwenden.
Entsprechend der beschriebenen Profilmodifikation läßt sich,
ausgehend vom Wälzschleifen mit Doppelkegelscheibe, eine Verfahrensänderung in Richtung Formschleifen durch die Erfindung herbeiführen. Die Vorteile beider Verfahren lassen sich
damit miteinander kombinieren. Konvex gekrümmte Zahnflanken
lassen sich durch konkave Hüllschnittflächen besser erreichen.
Das Zeitspanvolumen während des Schleifens einer Zahnflanke
bleibt annähernd konstant, da die Winkelgeschwindigkeit des
Tisches beim Schleifen des Kopfbereiches der Verzahnung verfahrensbedingt reduziert wird.

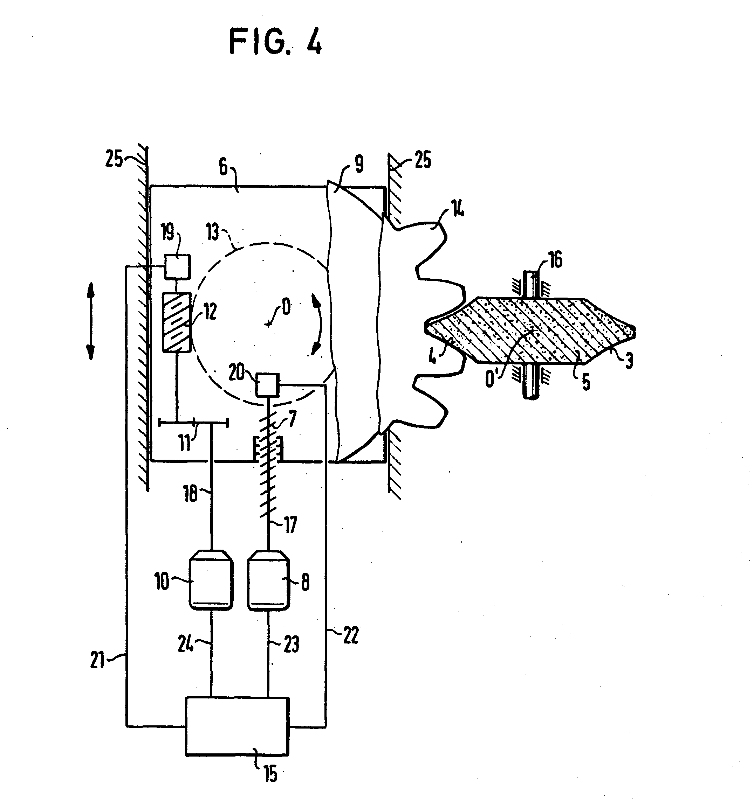

Die nach dem erfindungsgemäßen Verfahren arbeitende Wälzschleifmaschine besitzt eine nicht lineare Kopplung von
Werkstückschlitten- und -tischachse. Diese Konstruktion ist
schematisch in Fig. 4 in Draufsicht dargestellt. Ausgangspunkt ist hierbei eine NC-gesteuerte Wälzschleifmaschine.

Ein Schlitten 6 wird nach Fig. 4 über eine Kugelrollspindel
7 und einen Servomotor 8 angetrieben. Auf diesem Schlitten
6 mit seinem Mittelpunkt O befindet sich ein Werkstücktisch 9, welcher durch einen Servo-Motor 10, eine Getriebestufe 11, eine Schnecke 12 sowie ein Schneckenrad 13 angetrieben wird. Dieser Werkstücktisch 9 ist fest mit dem Schlitten 6 verbunden. Ein zu bearbeitendes Zahnrad 14 ist auf dem Werkstücktisch 9 zentrisch aufgespannt, d.h. der Werkstücktisch 9 und das Zahnrad 14 besitzen das gleiche Zentrum 0.

Der Schlitten 6 ist innerhalb von Schlittenführungen 25 in Pfeilrichtung hin- und herbewegbar; der Werkstücktisch 9 ist um die Achse 0 in Pfeilrichtung drehbar. Die Getriebestufe 11 wird über die Achse 18 von dem Servo-Motor 10, die Kugelrollspindel 7 von dem Servomotor 8 über die Achse 17 angetrieben.

Die Schleifscheibe 5 mit der konkav gekrümmten Schnittfläche des Profils 3 dreht sich um die Achse 16 und oszilliert in der Achse 0', welche parallel zur Zahnflanke 4 des Zahnrades 14 liegt.

Über Leitungen 23 und 24 sind die Servo-Motoren 8 und 9 mit einer NC-Steuereinheit 15 verbunden. Weiterhin sind an der Welle der Schnecke 12 ein Meßsystem 19 und an der Welle der Kugelrollspindel 7 ein Meßsystem 20 vorgesehen, welche jeweils über eine Leitung 21 bzw. 22 mit der NC-Steuereinheit 15 in Verbindung stehen. Die nachfolgende Formel stellt nun eine mögliche Verknüpfung zwischen den Achsen 17 und 18 im Falle der Herstellung einer Geradverzahnung bei kreisförmiger Profilierung der Schleifscheibe 5 dar. Es handelt sich hierbei um eine nicht lineare Kopplung der Achsen 17 und 18. Hierbei erfolgt die Weg- bzw. Winkelerfassung über die zwei vorgenannten inkrementalen Meßsysteme 19 und 20. Diese liefern Soll-Werte für den Drehwinkel des Werkstücktisches 7 und den Weg des Werkstückschlittens 6. In der NC-Steuereinheit erfolgt ein Vergleich der Soll-Werte mit den Ist-Werten und ein entsprechendes Nachstellen. Damit sind durch die NC-Steuereinheit die beiden Achsen 17 und 18 nicht linear verknüpft.

Bei Herstellung schrägverzahnter Räder muß zusätzlich zur vorgenannten Kopplung noch die Werkzeugschlittenachse mit in die vorgenannte Koppelung einbezogen werden. Bei der Werkzeugschlittenachse handelt es sich hierbei um die Achse des nicht näher dargestellten Werkzeugschlittens, mit dessen Hilfe die Schleifscheibe 5 entlang der Achse 0' oszilliert. Bei Schrägverzahnung erfolgt hierbei ein Schrägstellen der Schleifscheibe 5 auf die Verzahnungsschräge und eine Zusatzbewegung in radialer oder auch tangentialer Richtung zum Werkstück, d.h. dem Zahnrad 14 in Abhängigkeit von der aktuellen Position des Schlittens 6 und der Hublage der Schleifscheibe 5.

Bei Einsatz der einfachsten Form konkav gekrümmter Schnittflächen, d.h. einem Kreisprofil für das Profil 3 der Schleifscheibe 5, beträgt die translatorische Vorschubbewegung x des Werkstücktisches 9

$$x = r_b - \sin\varphi - \frac{r_b \cdot \cos\varphi - c}{\tan\varphi}$$

Hierin bedeuten:

$r_b \,\hat{=}\,$ Grundkreisradius

$\varphi \,\hat{=}\,$ Tischdrehwinkel

$c \,\hat{=}\,$ Konstante

Die vorgenannte Formel stellt eine mögliche Verknüpfung zwischen beiden Achsen 17 und 18 im Falle der Herstellung einer Geradverzahnung bei Einsatz einer kreisförmigen Profilierung der Schleifscheibe 5 dar. Durch die spezielle Gestaltung des Profils der Schleifscheibe mit Einsatz auf einer Wälzschleifmaschine handelt es sich bei der vorliegenden Erfindung um eine Zwischenform zwischen dem Formschleifen und dem Teilwälzschleifen. Die Schleifscheibe 5 ist in ihrem Profil 3 konkav ausgebildet (im Sonderfall ein Kreisbogen), wobei die Koppelung der Achsen 17 und 18 nicht linear ist. Diese nicht-

**0214411**

lineare Koppelung kann durch die NC-Steuereinheit 15 bewirkt werden.

Durch die Ausgestaltung der vom Profil der Schleifscheibe 5 und der Hublänge begrenzten Hüllschnittfläche in Form einer konkav gekrümmten Fläche 3 lassen sich entweder bei konstanter Schleifzeit Flankenformfehler reduzieren oder bei konstantem Flankenformfehler entweder die Hubfrequenz reduzieren oder die Schleifzeit beträchtlich verkürzen.

Patentanwälte
Dipl.-Ing. E. Eder
Dipl.-Ing. K Schieschke
8 München 40, Elisabethstraße 34

Patentanwälte
Dipl.-Ing. E. Eder
Dipl.-Ing. K. Schleschke
8 München 40, Elisabethstraße 34

Patentansprüche:

1. Wälzschleifverfahren zum Herstellen gekrümmter Zahnflanken eines auf einem Werkstücktisch befestigten Zahnrades durch mindestens eine Hubbewegungen ausführende Schleifscheibe, dadurch gekennzeichnet, daß die Zahnflanke (4) durch eine vom Profil (3) der Schleifscheibe (5) und der Hublänge begrenzte, konkave Hüllschnittfläche erzeugt wird.

2. Vorrichtung zur Durchführung des Verfahrens nach Anspruch 1, dadurch gekennzeichnet, daß das Profil (3) der Schleifscheibe (5) als konkave, gekrümmte Schnittfläche ausgebildet ist.

3. Vorrichtung nach Anspruch 2, mit Doppelkegelscheibe, dadurch gekennzeichnet, daß beide Seiten der Doppelkegelscheibe jeweils als konkav gekrümmte Schnittfläche ausgebildet sind.

4. Vorrichtung nach Anspruch 2 oder 3, dadurch gekennzeichnet, daß bei Einsatz kreisförmig gekrümmter Schnittflächen des Profils (3) der Schleifscheibe (5) die Vorschubbewegung des Werkstücktisches

$$x = r_b \cdot \sin\varphi - \frac{r_b \cdot \cos\varphi - c}{\tan\varphi}$$

ist.

5. Vorrichtung nach Anspruch 4, an einer Wälzschleifmaschine, gekennzeichnet durch nicht lineare Koppelung der Achse (17) des Werkstückschlittens (6) und der Achse (18) des Werkstücktisches (9).

6. Vorrichtung nach Anspruch 5, gekennzeichnet durch Einbeziehung der Werkzeugschlittenachse in die nicht lineare Koppelung.

Patent.. ..e
Dipl.-Ing. E. .. 'er
Dipl.-Ing. .. .. ..chke
8 München 40, Elisabethstraße 34

**0214411**

FIG. 1

$F_f$

1

1

1

2

FIG. 2

$F_f$

3

3

3

4

Patentanwälte
Dipl.-Ing. E. Eder
Dipl.-Ing. K. Schieschke

**0214411**

FIG. 3

Patentanwälte
Dipl.-Ing. E. Eder
Dipl.-Ing. K. Schieschke
8 München 40, Elisabethstraße 34

0214411

# FIG. 4

Patentanwälte
Dipl.-Ing. E. Eder
Dipl.-Ing. K. Schieschke
8 München 40, Elisabethstraße 34